# FASCICULE DE BREVET EUROPEEN

(11) **EP 0 629 629 B1**
(45) Date de publication et mention de la délivrance du brevet: **26.08.1998**
(21) Numéro de dépôt: 94401352.3
(22) Date de dépôt: 16.06.1994
(51) Int. Cl.: C07F 7/22, C03C 17/23, C03C 17/245

(54) **Composés pulvérulents organo-métalliques destinés à former une couche d'oxyde d'étain sur un substrat, procédé de mise en oeuvre et substrat ainsi revêtu**
Pulverförmige Organometallverbindungen zur Herstellung einer Zinnoxidbeschichtung auf Substraten, Betriebsverfahren und beschichtete Substrate
Powdery organometallic compounds intended for forming a tin oxyde film on substrates, implementation and coated substrates obtained thereby

(30) Priorité: 17.06.1993 FR 9307335
(43) Date de publication de la demande: 21.12.1994
(73) Titulaire: SAINT-GOBAIN VITRAGE, 92400 Courbevoie (FR)
(72) Inventeur: Oudard, Jean-François, F-60310 Thiescourt (FR)
(74) Mandataire: Renous Chan, Véronique

(56) Documents cités:
- EP-A- 0 103 511
- EP-A- 0 106 744
- EP-A- 0 178 956
- EP-A- 0 192 009
- EP-A- 0 196 178
- EP-A- 0 364 337
- US-A- 4 401 695

## Description

L'invention concerne des composés pulvérulents organo-métalliques destinés à former une couche d'oxyde d'étain sur un substrat transparent, notamment en verre, et ceci par une technique de pyrolyse. L'invention concerne également le procédé de dépôt par pyrolyse ainsi que le substrat une fois revêtu.

Il est connu de revêtir des susbstrats de verre par des couches minces d'oxyde métallique dopé, et notamment des couches d'oxyde d'étain dopé par un halogène type fluor, afin de leur conférer certaines propriétés, dont des propriétés sur le rayonnement infra-rouge et/ou des propriétés de conduction électrique. On peut ainsi obtenir des vitrages dits bas-émissifs ou des vitrages chauffants.

Il existe différentes techniques pour déposer de telles couches sur un substrat, dont la technique dite de pyrolyse de poudre.

Cette technique consiste à projeter des composés organo-métalliques appropriés, ici stanniques et halogénés, se trouvant sous forme de particules en suspension dans un gaz vecteur, et ceci directement sur la surface du substrat en verre porté à haute température, par exemple de l'ordre de 400 à 650°C. Ces particules, au contact du verre chaud, s'y décomposent en laissant un film d'oxyde. Il s'agit d'une technique éprouvée qui présente l'avantage de permettre un dépôt en continu sur un ruban de verre d'une ligne de production d'une installation "float", et qui permet d'obtenir des revêtements de qualité. Des dispositifs appropriés pour mettre en oeuvre cette technique sont par exemple décrits dans les brevets EP-B-0 125 153 et EP-A-0 374 023.

Différents types de composés organo-métalliques pulvérulents sont susceptibles de convenir pour obtenir des couches d'oxyde d'étain dopé au fluor SnO₂:F.

Il est ainsi connu des composés comportant à la fois de l'étain et du fluor, tels que le dipropylditrifluoroacétate d'étain (C₃H₇)₂ (SnCF₃COO)₂ ou le dibutyl di-trifluoro acétate d'étain (C₄H₉)₂ Sn (CF₃COO)₂, décrits dans le brevet EP-B-0 106 744, ou le difluorure de dibutylétain (C₄H₉)₂SnF₂, appelé D.B.T.F. et dont une synthèse est décrite dans le brevet EP-B-0 178 956.

Il est également connu du brevet EP-B-0 039 256 un composé stannique dépourvu d'halogène tel que l'oxyde de dibutylétain (n-C₄H₉)₂SnO appelé D.B.T.O. que l'on associe à un autre composé porteur d'halogène tel que le D.B.T.F. Sont choisies, pour tous ces composés, des granulométries de particule assez faibles, avec au plus des diamètres de particules moyens de l'ordre de 15 à 20 micromètres et plutôt des diamètres de particules tous inférieurs à 20 micromètres, ceci afin de faciliter leur mise en suspension dans le gaz vecteur et leur écoulement homogène depuis les dispositifs de distribution jusqu'à la surface du substrat à revêtir.

Comme déjà évoqué, les revêtements obtenus à partir de ces composés pulvérulents présentent un aspect optique et des performances satisfaisantes. Ainsi, conformément à l'enseignement des brevets EP-B-0 125 153 et EP-A-0 374 023 déjà mentionnés, on peut obtenir, à partir de poudres de D.B.T.F. de granulométrie inférieure à 20 micromètres, des couches de SnO₂:F présentant une épaisseur régulière et dont l'émissivité peut aller jusqu'à 0,25.

On a cherché à abaisser encore l'émissivité de telles couches pyrolysées, notamment en jouant sur les conditions de dépôt comme la température du substrat, ou en augmentant l'épaisseur de ces couches. Mais ces optimisations ont leurs limites, ne serait-ce que parce qu'elles engendrent des surcoûts en termes d'énergie consommée et/ou de matières premières. Par ailleurs, augmenter l'épaisseur de la couche peut en modifier l'aspect optique de manière non souhaitée, et le "gain" d'émissivité s'amenuise au fur et à mesure de cette augmentation.

Le problème technique que l'invention se propose de résoudre consiste alors à améliorer, par des moyens différents, les propriétés d'émissivité et/ou de conductivité électrique des couches pyrolysées d'oxyde d'étain dopé, et ceci sans entraîner de difficultés et/ou surcoûts dans la production de ces dernières.

L'invention a pour objet un (des) composé(s) pulvérulent(s) organo-métallique(s) contenant de l'étain et un halogène, notamment le fluor, qui est(sont) destiné(s) à se pyrolyser sous l'effet de la chaleur à la surface d'un substrat transparent, notamment en verre, afin d'y former une couche d'oxyde dopé avec un halogène et présentant de ce fait des propriétés sur le rayonnement infra-rouge et/ou des propriétés électriques. Ce(s) composé(s) présente(nt) conformément à l'invention une granulométrie telle que le diamètre des particules d₉₀ est compris entre 40 et 200 micromètres, notamment entre 50 et 150 micromètres et de préférence entre 60 et 100 micromètres.

On préfère que sa granulométrie soit choisie de manière à ce qu'en outre le diamètre des particules d₁₀ soit compris entre 8 et 30 micromètres, notamment entre 10 et 20 micromètres. De même, sa granulométrie peut être également sélectionnée pour que, par ailleurs, le diamètre des particules d₅₀ soit compris entre 20 et 60 micromètres, notamment entre 25 et 50 micromètres.

On précise que ces termes « d₉₀ », « d₅₀ » et « d₁₀ » signifient que respectivement 90 %, 50 % et 10 % des particules de la poudre en question ont un diamètre inférieur à la valeur indiquée. La valeur de d₉₀ donne une idée claire de la taille des particules. Combinée avec les valeurs de d₁₀ et/ou d₅₀,elle précise la distribution des tailles de particules dans une gamme donnée de valeurs de diamètre.

L'invention a également pour objet le procédé de dépôt qui, pour obtenir des couches d'oxyde d'étain dopé avec un halogène, notamment le fluor, sur des substrats transparents notamment en verre, emploie une technique de pyrolyse de composés organo-métalliques comprenant de l'étain et l'halogène en question et dont la granulométrie est ainsi définie.

De préférence, le composé organo-métallique choisi est "auto-dopant" dans la mesure où il contient à la fois étain et fluor, ce qui évite d'avoir à effectuer des mélanges de composés. Il s'agit, avantageusement, majoritairement de D.B.T.F.

Les auteurs de l'invention ont ainsi découvert que, de manière surprenante, sélectionner des granulométries de particules beaucoup plus élevées que celles préconisées généralement permettait d'obtenir des couches dont l'émissivité et la conductivité électrique sont, à épaisseurs de couches d'oxyde égales, significativement meilleures. Ainsi leur émissivité est inférieure à 0,2 et peut atteindre des valeurs de 0,16 à 0,18 tandis que leur résistivité électrique reste inférieure à 8,0.10⁻⁴ ohm.cm et notamment comprise entre 7,0.10⁻⁴ et 5,5.10⁻⁴ ohm.cm, des épaisseurs de couches d'oxyde de préférence comprises entre 300 et 420 nm.

Ce qui est tout-à-fait avantageux est que cette amélioration des performances des couches d'oxyde d'étain dopé ne s'opère pas au détriment de la facilité de mise en oeuvre du dépôt des couches, ni au détriment de leur qualité optique.

En effet, en choisissant délibérément des granulométries très élevées, on aurait pu au contraire craindre de se voir exposé à des problèmes d'inhomogénéité de la suspension poudre-gaz vecteur, et à des problèmes d'écoulement de ladite suspension dans les dispositifs de distribution, ce qui n'a pas été le cas dans la gamme de granulométries choisie selon l'invention.

Par ailleurs, les couches obtenues sont régulières en épaisseur et d'un aspect visuel homogène et satisfaisant.

Pour améliorer encore cet aspect visuel, et notamment pour garantir une neutralité de coloration en réflexion du substrat du côté où est déposée la couche d'oxyde d'étain dopé, il est bien sûr possible d'interposer, entre substrat et couche d'oxyde d'étain dopé, un revêtement intermédiaire. Ce revêtement peut notamment être à base d'un matériau diélectrique composé par exemple d'au moins un oxyde métallique choisi dans la gamme des oxydes d'aluminium, de titane, de zinc, d'étain ou d'indium, comme il est connu du brevet FR-B-2 670 199, ou à base d'un matériau en oxynitrure et/ou oxycarbure de silicium, comme il est connu de la demande de brevet FR-A-2 677 639.

Peut également être ajouté un revêtement "extérieur" recouvrant la couche d'oxyde d'étain dopé, et qui peut notamment être à base d'oxyde de silicium. Les caractéristiques de ces revêtements intermédiaire d'une part, extérieur d'autre part, en termes d'épaisseur et d'indice de réfraction, peuvent être avantageusement choisies conformément à la demande de brevet EP-A-0 544 577 ou conformément à la demande de brevet français déposée le 4 février 1993 sous le numéro 93/01545.

Les auteurs de l'invention ont réussi à corréler l'augmentation des performances de la couche d'oxyde d'étain avec l'augmentation de la taille des cristaux qui la composent.

En effet, ils ont constaté empiriquement que la granulométrie des particules de composés organo-métalliques avait une influence directe sur la manière dont la cristallisation de la couche d'oxyde obtenue s'effectuait, et notamment sur la taille des cristaux et sur leur orientation privilégiée. Même si les tailles des particules de poudre et les cristaux sont très loin d'être du même ordre, il semble cependant que plus les particules de composés organo-métalliques ont un fort diamètre, plus les cristaux de la couche seront de taille importante et plus ils présentent une orientation marquée. Cela a pour conséquence que le nombre des joints de grains "inter-cristaux" dans la couche diminuerait, ce qui augmenterait la mobilité des électrons libres dans cette dernière et donc, en définitive, en augmenterait la conductivité électrique et en abaisserait l'émissivité, émissivité et conductivité étant liées.

En mesurant expérimentalement la taille des cristaux des couches, on obtient effectivement des valeurs de l'ordre de notamment 20 nanomètres, bien supérieures aux valeurs obtenues pour des couches obtenues à partir de pyrolyse de poudres de granulométrie usuelle, par exemple de d₉₀ de 25 micromètres.

Le fait d'utiliser des poudres de composés organo-métalliques à "forte" granulométrie présente une autre conséquence avantageuse, qui consiste en une augmentation non négligeable du rendement de pyrolyse. Ce rendement se calcule en mesurant la quantité en poids de composés organo-métalliques nécessaire pour obtenir une couche d'oxyde d'épaisseur donnée. On a ainsi observé que ce rendement, de manière parfaitement imprévisible, augmente d'environ 20 % si l'on choisit une granulométrie de poudre d₉₀ de 60 micromètres conformément à l'invention plutôt qu'une granulométrie "standard" d₉₀ de 20 à 25 micromètres. Cette augmentation de rendement engendre des réductions significatives de coût de matières premières, et ce d'autant plus que l'invention permet de moduler les épaisseurs de couche, en fonction du niveau de performances voulu et de la quantité d'organo-métalliques à utiliser. Ainsi, à épaisseurs de couches égales, émissivité et résistivité électriques chutent si l'on choisit les fortes granulométries selon l'invention. Mais on peut également choisir de conserver des valeurs d'émissivité et de résistivité similaires en diminuant l'épaisseur des couches.

L'invention est maintenant décrite plus en détails à l'aide des exemples de réalisation suivants, non limitatifs.

Ils concernent tous le dépôt, sur un substrat de verre float silico-sodo-calcique de 4 mm d'épaisseur, d'une couche de SnO₂:F d'environ 340 nm par pyrolyse d'une poudre de 100 % de D.B.T.F., dans les conditions de dépôt et à l'aide des appareillages connus de l'un ou l'autre des brevets EP-B-0 125 153 et EP-A-0 374 023, brevets auxquels on se rapportera pour plus de précisions. Le substrat est à une température d'environ 550°C lors du dépôt. L'exemple 1 est l'exemple comparatif utilisant des faibles granulométries standards de poudre D.B.T.F.

Le tableau 1 ci-dessous indique pour chacun des exemple 1 à 7, les granulométries, exprimées en micromètres, d₉₀, d₅₀ et d₁₀ des poudres de D.B.T.F. choisies. L'ensemble de ces granulométries permet de bien évaluer la distribution des diamètres de particule de chacune des poudres utilisées.

**TABLEAU 1**

| | d₁₀ | d₅₀ | d₉₀ |
|---|---|---|---|
| Exemple 1 | 5 | 12-15 | 25 |
| Exemple 2 | - | - | 40 |
| Exemple 3 | - | - | 50 |
| Exemple 4 | 10-15 | 25-35 | 60 |
| Exemple 5 | 20 | 50 | 100 |
| Exemple 6 | - | - | 150 |
| Exemple 7 | - | - | 200 |

Le tableau 2 ci-dessous résume les caractéristiques des couches obtenues à partir de ces sept poudres de D.B.T.F. : l'émissivité Epsilon sans unité, et la résistivité électrique R en ohm.cm.

**TABLEAU 2**

| | Epsilon | R |
|---|---|---|
| Exemple 1 | 0,25 | 10.10⁻⁴ |
| Exemple 2 | 0,22 | 8,8.10⁻⁴ |
| Exemple 3 | 0,20 | 8,0.10⁻⁴ |
| Exemple 4 | 0,18 | 7,0.10⁻⁴ |
| Exemple 5 | 0,16 | 5,5.10⁻⁴ |
| Exemple 6 | 0,17 | 6.10⁻⁴ |
| Exemple 7 | 0,18 | 7.10⁻⁴ |

Pour deux des exemples, l'exemple 1 comparatif d'une part et l'exemple 4 d'autre part, ont été évaluées par rayons X les tailles des cristaux des couches de SnO₂:F.

Ces évaluations ont été faites en mesurant la largeur à mi-hauteur du pic représenté dans les spectres R-X obtenues et qui correspond à la raie (2, 0, 0) présentant une intensité beaucoup plus importante que les autres raies.

D'après les spectres R-X obtenus par analyse des couches selon l'exemple 1 comparatif d'une part et selon l'exemple 4 conforme à l'invention d'autre part, on constate que le diamètre moyen des cristaux d'une couche obtenue avec des poudres de granulométrie standard (exemple 1) est d'environ 13 nanomètres, tandis que celui d'une couche obtenue avec des poudres de granulométrie supérieure (exemple 4) est voisin de 20 nanomètres. Les granulométries de poudre selon l'invention permettent donc d'obtenir des tailles de cristaux plus de 50 % plus élevées.

Par ailleurs, en comparant les deux spectres, notamment le nombre de pics et leur taille, on peut avoir une indication quand à la cristallisation des deux couches. Il s'avère que la couche selon l'exemple 4 présente des cristaux dont l'orientation est très marquée, beaucoup plus que dans le cas de la couche selon l'exemple 1.

Il semble donc que ce soit la conjugaison d'une taille de cristaux plus grande et d'une orientation cristalline plus privilégiée qui entraîne les propriétés électriques améliorées constatées d'après le tableau 2.

Les conclusions que l'on peut tirer de ces exemples et résultats sont les suivantes: Jusqu'à des granulométries d₉₀ de l'ordre de 150 voire 200 micromètres, aucun problème avec les appareillages n'a été rencontré du fait du choix de telles granulométries. Le procédé de dépôt ne nécessite donc aucune adaptation ou modification. Tous les substrats revêtus de ces couches présentent une haute transmission lumineuse T_{L} d'au moins 70 à 75 % selon l'illuminant D₆₅ et ne présentent pas de défauts optiques notables. Par ailleurs, on voit qu'émissivité et résistivité diminuent de façon importante quand la granulométrie augmente.

L'émissivité diminue de près de 30 % si on choisit une granulométrie d₉₀ de 60 micromètres plutôt que la granulométrie d₉₀ de 25 micromètres et il en est de même pour la résistivité électrique.

Ces améliorations seraient liées à une modification de la manière dont s'opère la cristallisation des couches, les cristaux ayant tendance à être de taille significativement plus importante, notamment d'au moins 30 %, voire 50 % et plus et présentant une orientation plus marquée.

## Revendications

1. Composé pulvérulent organo-métallique contenant de l'étain et un halogène, notamment du fluor, destiné à se pyrolyser sous l'effet de la chaleur à la surface d'un substrat transparent, notamment en verre, afin d'y former une couche d'oxyde d'étain dopé avec un halogène à propriétés sur le rayonnement infra-rouge et/ou électriques, **caractérisé en ce que** sa granulométrie est choisie telle que le diamètre des particules d₉₀ est compris entre 40 et 200 micromètres, notamment 50 et 150 micromètres et de préférence 60 et 100 micromètres.

2. Composé selon la revendication 1, **caractérisé en ce que** sa granulométrie est choisie telle que le diamètre des particules d₁₀ est compris entre 8 et 30 micromètres, de préférence entre 10 et 20 micromètres.

3. Composé selon l'une des revendications précédentes, **caractérisé en ce que** sa granulométrie est choisie telle que le diamètre des particules d₅₀ est compris entre 20 et 60 micromètres, de préférence entre 25 et 50 micromètres.

4. Composé selon l'une des revendications précédentes, **caractérisé en ce qu'**il est majoritairement constitué d'une poudre de difluorure de dibutyl étain D.B.T.F

5. Procédé de dépôt sur un substrat transparent, notamment en verre, d'une couche d'oxyde d'étain dopé avec un halogène, notamment avec du fluor, et présentant des propriétés sur le rayonnement infra-rouge par une technique de pyrolyse de composé pulvérulent organo-métallique contenant de l'étain et l'halogène en question, **caractérisé en ce que** ledit composé pulvérulent organo-métallique a une granulométrie choisie telle que le diamètre des particules d₉₀ est compris entre 40 et 200 micromètres, notamment entre 50 et 150 et de préférence entre 60 et 100 micromètres.

6. Procédé de dépôt selon la revendication 5, **caractérisé en ce que** la granulométrie est choisie telle que le diamètre des particules d₁₀ est compris entre 8 et 30 micromètres, de préférence entre 10 et 20 micromètres.

7. Procédé de dépôt selon l'une des revendications 5 ou 6, **caractérisé en ce que** la granulométrie est choisie telle que le diamètre des particules d₅₀ est compris entre 20 et 60 micromètres, de préférence entre 25 et 50 micromètres.

8. Procédé selon l'une des revendications 5 à 7, **caractérisé en ce que** le composé pulvérulent organo-métallique est majoritairement constitué de difluorure de dibutyl étain D.B.T.F.

9. Substrat transparent, notamment en verre, revêtu d'une couche d'oxyde d'étain dopé avec un halogène, notamment le fluor, et présentant des propriétés sur le rayonnement infra-rouge et/ou des propriétés électriques et déposée par pyrolyse d'un composé pulvérulent organo-métallique conformément au procédé selon l'une des revendications 5 à 8.

10. Substrat revêtu selon la revendication 9, **caractérisé en ce que** la couche d'oxyde d'étain dopé est composée de cristaux dont le diamètre moyen est d'environ 20 nanomètres.

11. Substrat transparent, notamment en verre, revêtu d'une couche d'oxyde d'étain dopé avec un halogène, notamment le fluor, et présentant des propriétés sur le rayonnement infra-rouge, **caractérisé en ce que** ladite couche d'oxyde est composée de cristaux dont le diamètre moyen est d'environ 20 nanomètres.

12. Substrat revêtu selon l'une des revendications 9 à 11, **caractérisé en ce que** l'épaisseur de la couche d'oxyde d'étain dopé est comprise entre 300 et 420 nanomètres, notamment d'environ 340 nanomètres.

13. Substrat revêtu selon l'une des revendications 9 à 12, **caractérisé en ce que** son émissivité est inférieure à 0,2 et notamment comprise entre 0,16 et 0,18 **et en ce que** sa résistivité est inférieure à 8,0.10⁻⁴ ohm.cm et notamment comprise entre 7,0.10⁻⁴ et 5,5.10⁻⁴ ohm.cm.

14. Substrat revêtu selon l'une des revendications 9 à 13, **caractérisé en ce qu'**il comporte en outre au moins un revêtement intermédiaire disposé entre le substrat et la couche d'oxyde d'étain dopé et qui est notamment en un matériau diélectrique composé d'au moins un des oxydes métalliques comprenant l'oxyde d'aluminium, de titane, de zinc, d'étain, d'indium ou un matériau diélectrique à base d'oxycarbure et/ou oxynitrure de silicium.

15. Substrat revêtu selon l'une des revendications 9 à 14, **caractérisé en ce qu'**il comporte également un revêtement extérieur recouvrant la couche d'oxyde d'étain dopé et notamment à base d'oxyde de silicium.

16. Application du substrat selon l'une des revendications 9 à 15 à la fabrication de vitrages bas-émissifs et/ou chauffants.

## Claims

1. Pulverulent organometallic compound containing tin and a halogen, notably fluorine, intended for pyrolyzing under the effect of heat on the surface of a transparent substrate, notably of glass, in order to form there a film of tin oxide doped with a halogen having properties with respect to infrared radiation and/or electrical properties, characterized in that its granulometry is chosen such that the diameter of the particles d₉₀ lies between 40 and 200 micrometres, notably 50 and 150 micrometres, and preferably 60 and 100 micrometres.

2. Compound according to Claim 1, characterized in that its granulometry is chosen such that the diameter of the particles d₁₀ lies between 8 and 30 micrometres, preferably between 10 and 20 micrometres.

3. Compound according to one of the preceding Claims, characterized in that its granulometry is chosen such that the diameter of the particles d₅₀ lies between 20 and 60 micrometres, preferably between 25 and 50 micrometres.

4. Compound according to one of the preceding Claims, characterized in that it is predominantly composed of a powder of dibutyl tin difluoride DBTF.

5. Method of deposition, onto a transparent substrate, notably of glass, of a film of tin oxide doped with a halogen, notably with fluorine, and having properties with respect to infrared radiation, by a pyrolysis technique for pulverulent organometallic compound containing tin and the halogen in question, characterized in that said pulverulent organo-metallic compound has a granulometry chosen such that the diameter of the particles d₉₀ is from 40 to 200 micrometres, notably from 50 to 150 and preferably from 60 to 100 micrometres.

6. Method of deposition according to Claim 5, characterized in that the granulometry is chosen such that the diameter of the particles d₁₀ is from 8 to 30 micrometres, preferably from 10 to 20 micrometres.

7. Method of deposition according to one of Claims 5 or 6, characterized in that the granulometry is chosen such that the diameter of the particles d₅₀ is from 20 to 60 micrometres, preferably from 25 to 50 micrometres.

8. Method according to one of Claims 5 to 7, characterized in that the pulverulent organometallic compound is predominantly constituted of dibutyl tin difluoride DBTF.

9. Transparent substrate, notably of glass, coated with a film of tin oxide doped with a halogen, notably fluorine, and having properties in relation to infrared radiation and/or electrical properties and deposited by pyrolysis of a pulverulent organometallic compound by the method according to one of Claims 5 to 8.

10. Coated substrate according to Claim 9, characterized in that the film of doped tin oxide is composed of crystals, the mean diameter of which is approximately 20 nanometres.

11. Transparent substrate, notably of glass, coated with a film of tin oxide doped with a halogen, notably fluorine, and having properties with respect to infrared radiation, characterized in that said oxide film is composed of crystals, the mean diameter of which is approximately 20 nanometres.

12. Coated substrate according to one of Claims 9 to 11, characterized in that the thickness of the doped tin oxide film is between 300 and 420 nanometres, notably approximately 340 nanometres.

13. Coated substrate according to one of Claims 9 to 12, characterized in that its emissivity is less than 0.2 and notably lies between 0.16 and 0.18 and in that its resistivity is less than 8.0 x 10⁻⁴ ohm.cm and notably lies between 7.0 x 10⁻⁴ and 5.5 x 10⁻⁴ ohm.cm.

14. Coated substrate according to one of Claims 9 to 13, characterized in that it comprises, in addition, at least one intermediate coating disposed between the substrate and the film of doped tin oxide, and which is notably of a dielectric material composed of at least one of the metallic oxides including aluminium oxide, titanium oxide, zinc oxide, tin oxide, indium oxide or a dielectric material based upon silicon oxycarbide and/or oxynitride.

15. Coated substrate according to one of Claims 9 to 14, characterized in that it comprises also an external coating covering the doped tin oxide film, and notably based upon silicon oxide.

16. Application of the substrate according to one of Claims 9 to 15 to the production of low-emissivity and/or heating panes.

## Patentansprüche

1. Pulverförmige metallorganische Verbindung, die Zinn und ein Halogen, insbesondere Fluor, enthält und sich unter dem Einfluß von Hitze auf der Oberfläche eines transparenten Substrats, das insbesondere aus Glas besteht, pyrolytisch zersetzt, um dort eine Schicht aus mit einem Halogen dotiertem Zinnoxid mit auf die Infrarotstrahlung einwirkenden und/oder elektrischen Eigenschaften zu bilden, **dadurch gekennzeichnet, daß** ihre Korngrößenverteilung derart gewählt ist, daß der Teilchendurchmesser d₉₀ 40 bis 200 Mikrometer, insbesondere 50 bis 150 Mikrometer und vorzugsweise 60 bis 100 Mikrometer beträgt.

2. Verbindung nach Anspruch 1, **dadurch gekennzeichnet, daß** ihre Korngrößenverteilung derart gewählt ist, daß der Teilchendurchmesser d₁₀ 8 bis 30 Mikrometer und vorzugsweise 10 bis 20 Mikrometer beträgt.

3. Verbindung nach einem der vorhergehenden Ansprüche, **dadurch gekennzeichnet, daß** ihre Korngrößenverteilung derart gewählt ist, daß der Teilchendurchmesser d₅₀ 20 bis 60 Mikrometer und vorzugsweise 25 bis 50 Mikrometer beträgt.

4. Verbindung nach einem der vorhergehenden Ansprüche, **dadurch gekennzeichnet, daß** sie überwiegend aus einem Dibutylzinndifluorid-(DBTF-)Pulver besteht.

5. Verfahren zum Abscheiden einer Schicht aus mit einem Halogen, insbesondere Fluor, dotiertem Zinnoxid, die auf die Infrarotstrahlung einwirkende Eigenschaften besitzt, durch ein Verfahren zur Pyrolyse einer pulverförmigen metallorganischen Verbindung, die Zinn und das betreffende Halogen enthält, auf einem transparenten Substrat, das insbesondere aus Glas besteht, **dadurch gekennzeichnet, daß** die pulverförmige metallorganische Verbindung eine Korngrößenverteilung aufweist, die derart gewählt ist, daß der Teilchendurchmesser d₉₀ 40 bis 200 Mikrometer, insbesondere 50 bis 150 Mikrometer und vorzugsweise 60 bis 100 Mikrometer beträgt.

6. Abscheideverfahren nach Anspruch 5, **dadurch gekennzeichnet**, **daß** die Korngrößenverteilung derart gewählt ist, daß der Teilchendurchmesser d₁₀ 8 bis 30 Mikrometer und vorzugsweise 10 bis 20 Mikrometer beträgt.

7. Abscheideverfahren nach Anspruch 5 oder 6, **dadurch gekennzeichnet, daß** die Korngrößenverteilung derart gewählt ist, daß der Teilchendurchmesser d₅₀ 20 bis 60 Mikrometer und vorzugsweise 25 bis 50 Mikrometer beträgt.

8. Verfahren nach einem der Ansprüche 5 bis 7, **dadurch gekennzeichnet, daß** die pulverförmige metallorganische Verbindung überwiegend aus Dibutylzinndifluorid (DBTF) besteht.

9. Transparentes Substrat, das insbesondere aus Glas besteht und mit einer Schicht aus mit einem Halogen, insbesondere Fluor, dotiertem Zinnoxid beschichtet ist, die auf die Infrarotstrahlung einwirkende und/oder elektrische Eigenschaften besitzt und durch Pyrolyse einer pulverförmigen metallorganischen Verbindung gemäß dem Verfahren nach einem der Ansprüche 5 bis 8 aufgebracht worden ist.

10. Beschichtetes Substrat nach Anspruch 9, **dadurch gekennzeichnet, daß** die Schicht aus dotiertem Zinnoxid aus Kristallen besteht, deren mittlerer Durchmesser etwa 20 Nanometer beträgt.

11. Transparentes Substrat, das insbesondere aus Glas besteht und mit einer Schicht aus mit einem Halogen, insbesondere Fluor, dotiertem Zinnoxid überzogen ist, die auf die Infrarotstrahlung einwirkende Eigenschaften besitzt, **dadurch** **gekennzeichnet, daß** die Oxidschicht aus Kristallen besteht, deren mittlerer Durchmesser etwa 20 Nanometer beträgt.

12. Beschichtetes Substrat nach einem der Ansprüche 9 bis 11, **dadurch gekennzeichnet, daß** die Dicke der Schicht aus dotiertem Zinnoxid 300 bis 420 Nanometer und insbesondere etwa 340 Nanometer beträgt.

13. Beschichtetes Substrat nach einem der Ansprüche 9 bis 12, **dadurch gekennzeichnet, daß** sein Emissionskoeffizient weniger als 0,2 und insbesondere 0,16 bis 0,18 **und daß** sein spezifischer Widerstand weniger als 8,0·10⁻⁴ Ω·cm und insbesondere 7,0·10⁻⁴ bis 5,5·10⁻⁴ Ω·cm beträgt.

14. Beschichtetes Substrat nach einem der Ansprüche 9 bis 13, **dadurch gekennzeichnet, daß** es außerdem mindestens eine Zwischenbeschichtung enthält, die zwischen dem Substrat und der Schicht aus dotiertem Zinnoxid angeordnet ist und insbesondere aus einem dielektrischen Material besteht, das aus mindestens einem der Metalloxide, die das Oxid des Aluminiums, Titans, Zinks, Zinns und Indiums umfassen, oder einem dielektrischen Material auf der Basis von Siliciumcarbidoxid und/oder Siliciumnitridoxid zusammengesetzt ist.

15. Beschichtetes Substrat nach einem der Ansprüche 9 bis 14, **dadurch gekennzeichnet, daß** es noch eine Außenbeschichtung enthält, mit der die Schicht aus dotiertem Zinnoxid bedeckt ist und welche insbesondere Siliciumoxid als Basis hat.

16. Verwendung des Substrats nach einem der Ansprüche 9 bis 15 zur Herstellung niedrigemittierender und/oder beheizbarer Verglasungen.
